# EUROPÄISCHE PATENTSCHRIFT

(11) **EP 2 383 906 B1**
(45) Veröffentlichungstag und Bekanntmachung des Hinweises auf die Patenterteilung: **10.07.2019**
(21) Anmeldenummer: 11003369.3
(22) Anmeldetag: 21.04.2011
(51) Int. Cl.: H04B 10/25, H04W 88/08, H04B 7/155

(54) **Schnittstellenmodul für eine Einheit eines Antennenverteilsystems sowie Antennenverteilersystem**
Interface module for a unit of an antenna distributor system and antenna distributor system
Module d'interface pour une unité d'un système de répartition d'antennes et système de répartition d'antennes

(30) Priorität: 28.04.2010 DE 102010018492
(43) Veröffentlichungstag der Anmeldung: 02.11.2011
(73) Patentinhaber: Andrew Wireless Systems GmbH, 86675 Buchdorf (DE)
(72) Erfinder: Braz, Oliver, Dr., 86653 Monheim (DE); Stefanik, Jörg, 86609 Donauwörth (DE); Hoffmann, Jaroslav, 86609 Donauwörth (DE)
(74) Vertreter: FDST Patentanwälte

(56) Entgegenhaltungen:
- EP-A2- 1 995 968
- WO-A2-2008/092067
- GB-A- 2 418 803
- US-A1- 2009 046 624

## Beschreibung

Die Erfindung betrifft ein Schnittstellenmodul für eine zur Durchleitung und/oder Verstärkung von Kommunikationssignalen innerhalb eines Antennenverteilsystems ausgelegte Einheit. Die Erfindung betrifft weiter ein Antennenverteilsystem mit wenigstens einer Master-Unit sowie mit einer Anzahl von mit der Master-Unit verbundenen Remote-Units. Die Erfindung beschäftigt sich dabei mit dem Problem der Gewährleistung einer ausreichenden Funkkommunikation auf so genannten essentiellen, nichtöffentlichen Kommunikationskanälen, die dem Zug- oder Betriebsfunk, den Einsatzkräften des Katastrophenschutzes, des Rettungsdienstes, der Polizei, Feuerwehren, Notärzten und sonstigen Hilfskräften freigegeben und zu einer öffentlichen Funkkommunikation nicht benutzt werden dürfen. Sie beschäftigt sich ferner mit dem gesamten betrieblichen Mobilfunk von Anwendungen mit besonderen Sicherheitsaufgaben (BOS) in Industrie, öffentlichem Personennahverkehr (ÖPNV), Behörden, Flughäfen und Militär.

Zur Informationsübertragung auf den essentiellen Kommunikationskanälen im VHF Bereich wird in der Regel die Amplitudenmodulation eingesetzt; gegebenenfalls wird die Frequenzmodulation verwendet. In moderneren digitalen Bündelfunksystemen (z.B. Terrestrial Trunked Radio TETRA, TETRAPOL, P25,) werden des Weiteren die Phasenmodulation (π/4-DQPSK, π/8-D8PSK oder CQPSK) sowie die Quadraturamplitudenmodulation (4-, 16- oder 64- QAM) verwendet. Aufgrund des geringen Modulationshubs bzw. der niedrigen Übertragungsraten wird nur eine geringe Kanalbandbreite benötigt. Zur bidirektionalen Kommunikation werden die Betriebsarten eines Wechselverkehrs (Simplex), eines Gegenverkehrs (Duplex) oder eines bedingten Gegenverkehrs (Semi-Duplex) eingesetzt. Beim Wechselverkehr wird nur ein Band des essentiellen Kommunikationssignals belegt. Der Informationsaustausch geschieht abwechselnd und zeitversetzt. Beim Gegenverkehr wird wechselweise ein definiertes Unterband bzw. ein definiertes Oberband verwendet. Die wechselweise Kommunikation kann zeitgleich geschehen. Dabei werden so genannten Relaisstationen zum Aufbau der Kommunikation eingesetzt. Mobile Einheiten und Feststationen senden dabei im Unterband und empfangen im Oberband. Die Relaisstationen selbst, die die Reichweite erhöhen, empfangen die Gespräche im Unterband und senden diese im Oberband wieder aus. Die Trennung der Gespräche zwischen einer Uplink-Richtung (hin zu einer Basisstation) und einer Downlink-Richtung (hin zu einem mobilen Endgerät) findet demnach durch eine Frequenztrennung statt.

Während eines Katastrophenfalles, einer Bergungs- oder Rettungsaktion, bei Unfällen zu Luft, Wasser oder Land bedarf es einer raschen und ungestörten Kommunikation möglichst aller beteiligten Einsatzkräfte. Eine am Einsatzort notwendige Funkkommunikation der Einsatzkräfte ist bereits dadurch eingeschränkt, dass verschiedene Einheiten, wie beispielsweise Feuerwehr, Polizei und Katastrophenschutz, auf unterschiedlichen Kommunikationskanälen mit verschiedenen Übertragungsverfahren Informationen austauschen. Zusätzlich sind die für den Notfall vorgesehenen Kommunikationstechnologien und Übertragungsfrequenzen für die technischen Möglichkeiten heutiger moderner Mobilfunknetze nicht optimiert. Auf den für den Notfall freigeschalteten Frequenzen der essentiellen Kommunikationssignale von unterhalb 700 MHz können die Einsatzkräfte zwar über vergleichsweise große Distanzen vor Ort miteinander kommunizieren. Die innerhalb geschlossener Gebäude, Fahrzeugen oder Tunnels für moderne Mobilfunknetze gegebenenfalls vorhandene Repeatertechnologie kann aber aufgrund der langen Wellenlängen und aufgrund der für den Notfall vorgesehenen vergleichsweise einfachen Funkübermittlungsverfahren nicht optimal zur Übertragung der essentiellen Kommunikationssignale genutzt werden. Moderne Mobilfunknetze kommunizieren im Gigahertz-Bereich. Zur Kodierung der Signale werden komplexe Modulationsverfahren eingesetzt. Zur Trennung der Uplink- und Downlink-Kommunikation wird neben der Frequenztrennung insbesondere die Methode des Time-Division-Duplexing (TDD) eingesetzt, wobei die Zeitkonstanten jedoch um Größenordnungen kleiner sind als die beim Wechselverkehr innerhalb eines essentiellen Kommunikationskanals.

Während auf der einen Seite die Übertragung essentieller Kommunikationskanäle geringe Anforderungen an die Bandbreite stellt, muss auf der anderen Seite ein sehr großer Dynamikbereich gewährleistet und eine hohe Isolation zwischen der Uplink- und der Downlink-Kommunikation implementiert werden. Wegen der großen Wellenlängen essentieller Kommunikationssignale erfordert die Separation untereinander sowie die Isolation zwischen der Uplink- und der Downlink-Richtung mit Hilfe kanalselektiver analoger Filter einen nicht unerheblichen technischen Aufwand, der teilweise mit enormen Kosten verbunden ist.

Überlegungen, wie eine ausreichende Kommunikation auf essentiellen Kommunikationskanälen zwischen Einsatzkräften verschiedener Einheiten oder unter Nutzung einer modernen Netzwerkarchitektur zur Funkübertragung von Information gewährleistet werden kann, sind beispielsweise aus der US 2004/0070515 A1, der US 2005/0260983 A1 oder der US 2008/01711527 A1 bekannt.Die Übertragung abgetasteter Hochfrequenzsignale in verteilten Antennensystemen ist beispielsweise bekannt aus der US 5,852,651. In der WO 2008/092067 A2 ist eine modulare Drahtloskommunikationsplatform beschrieben. In der US 2009/046624 A1 sind ein System und ein Verfahren zum Einfügen von Signalen in ein Kommunikationssystem beschrieben.

Aufgabe der Erfindung ist es, eine technische Lösung zur Verfügung zu stellen, die eine ausreichende Kommunikation von Einsatzkräften auf essentiellen Kommunikationskanälen unter Nutzung einer modernen Funknetzarchitektur ermöglicht. Dabei sollen die von einer modernen Funknetzarchitektur bekannten Vorteile auch der Kommunikation auf essentiellen Kommunikationskanälen zur Verfügung gestellt werden.

Die gestellte Aufgabe wird erfindungsgemäß gelöst durch ein Schnittstellenmodul für eine zur Durchleitung und/oder Verstärkung von Kommunikationssignalen innerhalb eines Antennenverteilsystems ausgelegte Einheit, wobei das Schnittstellenmodul eine erste analoge Schnittstelle zur Weiterleitung und zum Empfang von Kommunikationssignalen mobiler Endgeräte, eine zweite Schnittstelle zur digitalen oder analogen Weiterleitung und zum Empfang von Kommunikationssignalen des Antennenverteilsystems, wenigstens einen Signalpfad zur Weiterleitung der empfangenen Kommunikationssignale zwischen den beiden Schnittstellen, und eine den Signalpfad aufnehmende steuerbare Digitaleinheit mit Mitteln zur Digitalisierung eingehender und zur Analogumwandlung ausgehender Kommunikationssignale umfasst. Dabei ist die Digitaleinheit ausgebildet, in den digitalisierten essentielle Kommunikationssignalen zu identifizieren, die übrigen Signale auszublenden und die ausgewählten essentiellen Kommunikationssignale weiterzuleiten.

Die Steuerung und/oder Umsetzung von essentiellen Kommunikationssignalen zwischen verschiedenen Remote-Units, einer optional angeschlossenen Basisstation oder eines optional angeschlossenen weiteren Netzes erfolgt dabei durch ein zentrales Schnittstellenmodul in der Master-Einheit. Dabei ist festzuhalten, dass ein Austausch zwischen einzelnen Zweigen des Verteilnetzwerks nur in digitaler Form angedacht ist. Eine Remote-Unit und eine Master-Unit stellen in diesem Sinne Einheiten des Antennenverteilsystems dar..

Mit anderen Worten sieht die Erfindung ein Schnittstellenmodul zur Ausrüstung einer oder mehrer Remote-Units sowie einer Master-Unit vor, wie sie für ein modernes Antennenverteilsystem eines Mobilfunknetzes bekannt sind. Eine solche Remote-Unit oder eine Mehrzahl solcher Remote-Units wird eingesetzt, um insbesondere in einem Funkschatten, innerhalb geschlossener Gebäude, in Tunnels, in Zügen, auf Bahnhöfen, in Stadien etc. eine ausreichende Kommunikation über Funk mit mobilen Endgeräten zu gewährleisten. Dabei befindet sich eine mit einer Basisstation des jeweiligen Funknetzes verbundene Master-Unit in der Nähe des Tunnels, des Gebäudes oder allgemein der abgeschatteten Örtlichkeit und übermittelt Kommunikationssignale zwischen der Basisstation und den Remote-Units, die innerhalb des Gebäudes oder allgemein im Funkschatten angeordnet sind. Die Remote-Units senden die erhaltenen Kommunikationssignale gegebenenfalls verstärkt aus und empfangen andererseits Kommunikationssignale von mobilen Endgeräten, die in Uplink-Richtung über die Master-Unit schließlich der Basisstation zugeführt werden. Die Remote-Units werden gewöhnlich auch als Relaisstationen bezeichnet. Diese Funknetzarchitektur hat den Vorteil, dass eine zentrale Steuerung der Remote-Units über die Master-Unit möglich ist. Die Verbindung der Master-Unit zur Basisstation kann drahtgebunden oder drahtlos sein. Die Remote-Units selbst sind beispielsweise drahtgebunden oder optisch mit der Master-Unit gekoppelt. Die Remote-Units können aber vorteilhaft auch als sogenannte Off-Air-Repeater ausgestaltet sein, die über Funk mit der Master-Unit in Verbindung stehen. Von der beschriebenen Funknetzarchitektur umfasst sind auch mehrere Master-Units, die ihrerseits wiederum mit einer Vielzahl von Remote-Units verbunden sind. Es sei darauf hingewiesen, dass in öffentlichen Mobilfunknetzen kein sogenannter "Direkt-Mode", d.h. eine direkte Verbindung zwischen zwei mobilen Endgeräten möglich ist.

Die Erfindung geht nun insbesondere von der Überlegung aus, eine Remote-Unit zur Übertragung und zur Einbindung von essentiellen Kommunikationssignalen in das gegebene Mobilfunknetz einzusetzen. Insbesondere soll es auch ermöglicht werden, eine bidirektionale Kommunikation auf essentiellen Kommunikationskanälen über eine oder mehrere Remote-Units mit der gegebenen Technologie zu ermöglichen. Ebenso soll die oder jede Master-Unit ertüchtigt werden, die essentiellen Kommunikationssignale entsprechend zu empfangen, weiterzuleiten und zu verteilen.

Dabei schlägt die Erfindung eine Schnittstellenmodul vor, wobei weitgehend auf analoge Trennungsmittel wie Duplexer oder analoge Filter verzichtet werden soll, um die essentiellen Kommunikationssignale untereinander abzutrennen bzw. die Uplink- und Downlink-Richtung ausreichend voneinander zu isolieren. Wegen der großen Wellenlängen der essentiellen Kommunikationssignale erfordert eine solche Ausgestaltung zur Abtrennung der schmalbandigen Kanäle einen enormen Platzbedarf und ist zudem mit hohen Kosten verbunden. Vielmehr geht die Erfindung den Weg, im Übertragungs- oder Signalpfad des Antennenverteilsystems zur Kommunikation mit einem mobilen Endgerät eine Digitaleinheit zu implementieren, die die eingehenden Signale zunächst digitalisiert um anschließend bis in Basisband zu demodulieren. Dies gelingt durch die Bereitstellung eines entsprechend ausgerüsteten Schnittstellenmoduls.

Eine für die essentiellen Kommunikationssignale erforderliche hohe Dynamik lässt sich dabei insbesondere durch eine schmalbandige digitale Überabtastung mit anschließender digitaler Abwärtsumsetzung (digital down conversion) realisieren. Es ist festzuhalten, dass im Falle einer digitalen Modulation keine Entschlüsselung der meist kryptierten Basisbanddaten erforderlich ist. Der mit diesem als "Decode and Forward" bekannten Schema verbundene Zeitversatz bzw. Zeitbedarf ist in üblichen Mobilfunknetzen nicht zu tolerieren, spielt aber bei den meist wechselseitig betriebenen Kommunikationsignalen der essentiellen Dienste nur eine untergeordnete Rolle. Insofern verbleibt der Digitaleinheit innerhalb des gegebenen Kommunikationsablaufs genügend Zeit zu einer ausreichenden Rasterung der eingehenden Kommunikationssignale und auf digitaler Ebene zu einer entsprechenden Identifizierung und zu einer Abtrennung der übrigen, für das essentielle Schnittstellenmodul nicht benötigten Kommunikationssignale. Insbesondere kann die Digitaleinheit die Frequenzen, die Art der Modulation der Übertragungssignale und das verwendete Übertragungsverfahren identifizieren und so essentielle Kommunikationssignale untereinander und von den übrigen Kommunikationssignalen unterscheiden. In einer bevorzugten Ausgestaltung wird die Digitaleinheit in einer oder mehreren Remote-Units über eine zentrale Master-Unit zur Auswahl, Weiterleitung oder Umsetzung in ein anderes Band oder eine andere Frequenz angewiesen.

Das Schnittstellenmodul ist insbesondere derart konzipiert, dass es den Informationsaustausch der essentiellen Kommunikationssignale losgelöst von den übrigen Kommunikationssignalen des Mobilfunknetzes gewährleistet. Es ist insofern bevorzugt als ein Zusatzmodul einer bestehenden Remote-Unit gedacht, wobei jedoch insbesondere auf deren bestehende Rechner- bzw. Softwarearchitektur zurückgegriffen werden kann. Insofern muss die hier beschriebene Digitaleinheit insbesondere nicht als eine separate Digitaleinheit ausgebildet sein. Vielmehr kann diese durch eine bereits vorhandene, zur Übertragung der Kommunikationssignale des Mobilfunknetzes in einer TDD- bzw. FDD-Architektur vorgesehene Digitaleinheit vollständig implementiert sein. Die für die vorliegende Erfindung notwendigen Funktionen und Eigenschaften können dann durch eine entsprechende Programmierung der gegebenen Rechner- oder Prozessorarchitektur realisiert werden.

Der Signalpfad des Schnittstellenmoduls ist im einfachsten Fall durch eine Signalleitung gegeben, die die beiden Schnittstellen miteinander verbindet. Eine solche Signalleitung wäre gegebenenfalls für einen Wechselverkehr der Uplink- und der Downlink-Signale ausreichend, bietet jedoch nicht genügend Möglichkeiten, weitere essentielle Kommunikationssignale anderer Übertragungsverfahren wie Duplex oder Semiduplex mit zu umfassen. Aus diesem Grund ist der Signalpfad zweckmäßigerweise in mehrere separate Signalpfade für die Uplink-Richtung und mehrere separate Signalpfade für die Downlink-Richtung aufgeteilt. Über ein Zeitduplex- (TDD) oder über ein Frequenzduplex-Verfahren (FDD) erfolgt dann die Trennung der beiden Kommunikationsrichtungen entsprechend den beiden gegebenen Signalleitungen.

Die vorgeschlagene Architektur des Schnittstellenmoduls ermöglicht es weiter, die erhaltenen essentiellen Kommunikationssignale an die Master-Unit oder an eine oder mehrere Remote-Einheiten insbesondere auch kodiert, frequenzversetzt oder in einer sonstigen Art und Weise weiterbehandelt zu übermitteln. Ein entsprechender an die Remote-Unit oder die Master-Unit angeschlossener Steuerrechner ist dann in der Lage, die von einer spezifischen Remote-Unit empfangenen essentiellen Kommunikationssignale zu identifizieren, der Weiterleitung und/oder Umwandlung in derselben oder einer anderen Remote-Einheit anzuweisen. Des Weiteren hat die Mastereinheit optional die Möglichkeit diese Signale beispielsweise in ein Festnetz einzukoppeln. Umgekehrt kann die Master-Unit in Downlink-Richtung die Aussendung essentieller Kommunikationssignale wieder entsprechend aufbereiten und spezifisch der jeweiligen Remote-Unit anweisen. Über eine Adressierung kann die Remote-Unit insbesondere auch die für sie vorgesehenen Signale identifizieren. Über entsprechende Steuerbefehle kann die Digitaleinheit zu den entsprechenden Aktionen ertüchtigt und befähigt werden. In Uplink-Richtung ist es bevorzugt das abseparierte, essentielle Kommunikationssignal mit den anderen zu übertragenden Informationen wieder zusammengeführt, wobei Intermodulationseffekte durch einen ausreichenden Frequenzversatz der getrennten Signale zueinander verhindert werden. Die Verbindungsleitung zwischen der Master-Unit und der Remote-Unit ist in diesem Fall als eine gemeinsame Signalleitung zur Übertragung des gesamten Datenaustausches ausgestaltet. Insbesondere ist hierzu ein Lichtwellenleiter vorgesehen. Auch eine entsprechend ausgestaltete Koaxialleitung oder eine Zweidrahtleitung für elektrische Signale ist möglich.

In einer weiteren, hier nicht dargestellten Ausgestaltung, ist auch eine Anbindung mehrerer "Off-Air-Repeater" über ein Funkmodem denkbar.

In einer weiter bevorzugten Ausgestaltung ist die Digitaleinheit ausgebildet, charakteristische Signalparameter der identifizierten essentiellen Kommunikationssignale zu erfassen und ebenfalls über den Signalpfad weiterzuleiten. Die Übermittlung derartiger Signalparameter erlaubt es einem Nutzer beispielsweise festzustellen, welche Art von essentiellen Kommunikationssignalen ausgetauscht wird, mit welcher Häufigkeit eine solche Kommunikation stattfindet, oder auch, von welcher Remote-Unit das übertragene essentielle Kommunikationssignal stammt. Insbesondere erlaubt dies über eine Erfassung und Weiterleitung der empfangenen Signalstärke und/oder einer Laufzeiterkennung eine Lokalisierung des aussendenden mobilen Endgeräts. Auch kann die Art des Übertragungsverfahrens für das essentielle Kommunikationssignal identifiziert und gegebenenfalls mittels der Master-Unit eine automatisierte Anpassung der Digitaleinheit vorgenommen werden. Das Schnittstellenmodul ist dann ertüchtigt, die Kommunikation auf dem jeweiligen essentiellen Kommunikationsband mit dem entsprechenden Übertragungsverfahren herzustellen. Besonderes bevorzugt ist die Digitaleinheit ausgebildet, zwischen verschiedenen Übertragungsverfahren der essentiellen Kommunikationsverfahren, insbesondere zwischen einem Simplex-, einem Duplex- oder einem Semi-Duplex-Verfahren umzuschalten.

Insbesondere kann bei Weiterleitung der charakteristischen Signalparameter wie Signalstärke, Häufigkeit, Frequenzband und/oder Übertragungsverfahren bzw. Kommunikationsart der identifizierten essentiellen Kommunikationssignale eine jeweilige Umsetzung der entsprechenden Kommunikationssignale in andere essentielle Kommunikationskanäle veranlasst werden, so dass es den Einsatzkräften verschiedener Einheiten möglich wird, untereinander zu kommunizieren. Dabei ist das Schnittstellenmodul bevorzugt derart konzipiert, dass die Digitaleinheit eine Umsetzung in verschiedene Frequenzbänder ermöglicht und eine Übertragung der essentiellen Kommunikationssignale mit verschiedenen Übertragungsverfahren in verschiedenen Frequenzen gewährleistet.

Grundsätzlich ist eine Digitalisierung mit einer ausreichenden Abtastrate entsprechend bekannter Sampling-Verfahren möglich. Dabei kann grundsätzlich auch eine Modulation oder ein digitales Kodierverfahren zur Verbesserung der Übertragungsrate eingesetzt werden. Aus Kostengründen und wegen des hier verfolgten vornehmlichen Einsatzzweckes genügt es jedoch, die Digitaleinheit zu einer Digitalisierung der Kommunikationssignale im Basisband auszubilden.

Vorteilhafterweise ist die Digitaleinheit zu einer steuerbaren Verzögerung und/oder Unterbrechung der Weiterleitung der essentiellen Kommunikationssignale in Richtung zur ersten analogen Schnittstelle ausgebildet. Diese Ausgestaltung nimmt besonders Bezug auf die Ausbildung stehender Wellen in Gebäuden, Zug- oder Straßentunnels oder Stadien, die gerade bei den langwelligen Kommunikationssignalen der essentiellen Kommunikationskanäle auftreten. Eine solche Situation ist insbesondere eine Folge der Interferenzen, die im Überlappungsbereich der Strahlungsradien mehrerer in solchen Örtlichkeiten platzierter Remote-Units auftreten. Die resultierenden räumlichen Interferenzmuster hängen dabei stark von der jeweils eingesetzten Wellenlänge ab. Durch die Möglichkeit, den Downlink-Verkehr einer Remote-Unit für essentielle Kommunikationssignale zu verzögern, kann nun aktiv in die Gestaltung des sich ergebenden Interferenzmusters eingegriffen werden. Dieser als Gleichwellennetz bekannte Betrieb ermöglicht es, Funklöcher für mobile Empfangsgeräte zu reduzieren, indem beispielsweise bewusst eine entsprechend lokalisierte Remote-Unit in ihrer Abstrahlung verzögert wird. Da alle Remote-Units gleichphasig aussenden, werden destruktive Interferenzen vermieden. Alternativ kann eine Remote-Unit in Downlink-Richtung auch stumm geschaltet werden.

In einer weiter bevorzugten Ausgestaltung ist die Digitaleinheit zu einer steuerbaren Unterbrechung der Weiterleitung der essentiellen Kommunikationssignale in Richtung zur zweiten Schnittstelle ausgebildet. Dabei wird insbesondere Bezug darauf genommen, dass bei Vorhandensein mehrerer Remote-Units die übertragenen essentiellen Kommunikationssignale ein besseres Signal-zu-RauschVerhältnis aufweisen, wenn die signalschwächste Information nicht zur Bildung des Kommunikationssignals insgesamt herangezogen wird. Ausgehend von einer Signalstärkeerfassung kann insofern die Master-Unit automatisiert oder von außen gesteuert die hinsichtlich der Empfangsseite signalschwächste Remote-Unit in Uplink-Richtung stumm schalten. Mit diesem als "Up-Link-Muting" bekannten Verfahren kann eine insgesamt bessere Übertragungsqualität für die essentiellen Kommunikationssignale erzeugt werden.

In der Gegenrichtung kann durch einen Kurschlussschalter im DL-Pfad hinter dem Verstärker, in dessem Leerlauffall, die Aussendung von Rauschen unterdrückt werden. Dies ist speziell im Semi-Duplex-Betrieb während der Uplink-Zeit oder im Fall des Direkt Modus, in welchem auf Grund der Pegelverhältnisse kein Relais benötigt ist, sehr von Vorteil.

Hierzu ergänzend oder eigenständig bevorzugt ist die Digitaleinheit des Schnittstellenmoduls zu einer Rückführung der eingehenden essentiellen Kommunikationssignale in Richtung zur ersten analogen Schnittstelle ausgebildet. Mit anderen Worten wird hierdurch eine Remote-Unit zu einer direkten Kommunikation ertüchtigt, wobei gesteuert Information bzw. die identifizierten essentiellen Kommunikationssignale zu der Master-Unit oder einer oder mehrerer Remote-Units durchgeleitet werden oder nicht. Die erhaltenen essentiellen Kommunikationssignale werden gewissermaßen an der Digitaleinheit reflektiert und verstärkt sowie gegebenenfalls zeit- oder frequenzversetzt erneut zur Aussendung der ersten analogen Schnittstelle zur Funkübertragung aufgeschaltet. Dieser direkte Modus erlaubt es, die Funkkommunikation der Einsatzkräfte untereinander vor Ort zu verbessern. Insbesondere kann das "zurückreflektierte" Empfangssignal durch die Digitaleinheit so modifiziert werden, dass es auch von den mobilen Endgeräten der Einsatzkräfte anderer Einheiten empfangen und verarbeitet werden kann. In diesem Fall wirkt die derart gesteuerte Remote-Unit gewissermaßen als eine Relaisstation, die die Reichweite und Übertragungsstärke der essentiellen Kommunikationssignale zwischen den mobilen Endgeräten und vor allem zwischen den mobilen Einsatzkräften verschiedener Einheiten verbessert, so dass die Koordinierungsmöglichkeiten vor Ort deutlich vergrößert sind.

Zweckmäßigerweise ist die Digitaleinheit zu einer steuerbaren Frequenzumsetzung zwischen den Frequenzbändern essentieller Kommunikationssignale ausgebildet. Dies erlaubt - wie bereits vorbeschrieben - die Etablierung einer Kommunikation zwischen mobilen Endgeräten der Einsatzkräfte verschiedener Einheiten. Dabei ist die Digitaleinheit bevorzugt zusätzlich auch dazu ausgebildet, das jeweils verwendete Übertragungsverfahren der entsprechenden essentiellen Kommunikationskanäle zu berücksichtigen.

Um eine zentrale Weiterleitung, Steuerung und Überwachung des Informationsaustauschs zu ermöglichen, ist im Schnittstellenmodul eine Kommunikationseinheit umfasst. Die zentrale Steuerung obliegt dabei einem beispielsweise an der Master-Unit angeschlossenen zentralen Steuerrechner. Diese Kommunikationseinheit kann ein integrierter Bestandteil der Digitaleinheit sein. Wird zur Ausführung der vorbeschriebenen Funktionen jedoch beispielsweise eine bereits in einer vorhandenen Remote-Unit implementierte Digitaleinheit verwendet, so empfiehlt es sich, im Schnittstellenmodul eine separate Kommunikationseinheit vorzusehen, die den Datenaustausch zwischen der Master-Unit und der Digitaleinheit gewährleistet bzw. steuert. Zum Anschluss des Steuerrechners an die Master-Unit ist ebenfalls das Schnittstellenmodul vorzusehen, welches dann umgekehrt die Steuerdaten erhält, aufbereitet und über die bestehende Verbindung an das Schnittstellenmodul in der Remote-Unit übermittelt. Dabei kann der Datenaustausch beispielsweise mittels bekannter und geeigneter Netzwerke, wie LAN oder Ethernet realisiert werden. Ein solches digitales Datennetz bietet beispielsweise auch die Möglichkeit, jeder Remote-Unit eine eigene Adresse innerhalb des Netzwerks zuzuweisen. Über diese Adresse ist dann die jeweilige Digitaleinheit bzw. die jeweilige Remote-Unit direkt ansprechbar. Auch die zwischen zwei oder mehreren Remote-Units und/oder der Master-Unit übertragenen Informationen sind über die Adresse eindeutig identifiziert.

Hierzu bevorzugt ist die Kommunikationseinheit zur Aufkopplung der Informations- und Steuerdaten auf das Kommunikationssignal mit dem Signalpfad verbunden. Mit anderen Worten wird der Datenaustausch hinsichtlich der Informationen der erfassten essentiellen Kommunikationssignale und hinsichtlich der Steuerdaten für die Digitaleinheit dem zwischen den Remote-Units oder dem zur Master-Unit übertragenen Signal aufgeschaltet. Ein, insbesondere an die Master-Unit angeschlossener zentraler Steuerrechner ist dann in der Lage, die übertragenen Daten innerhalb des digitalen Datennetzes zu identifizieren, und über die Master-Unit auf die gewünschten Remote-Units umzuleiten.. Im Falle komplexerer Vermittlungsaufgaben kann diesem Rechner dann auch die zentrale Ansteuerung der Digitaleinheiten der Remote-Units übertragen werden. Hierzu kann auch der aktuelle Status sowie weitere Informationen über die Art und die Häufigkeit der Kommunikation auf essentiellen Kommunikationskanälen abgefragt und angezeigt werden. Der zentrale Steuerrechner kann aber auch Teil der Master-Unit selbst sein, die dann entsprechend intelligent ist.

Zur Abtrennung übriger Kommunikationssignale von den zu separierenden essentiellen Kommunikationssignalen ist bevorzugt wenigstens eine analoge Filtereinheit zur Abtrennung der Frequenzbänder eingehender und ausgehender analoger essentieller Kommunikationssignale umfasst. Durch eine solche analoge Filtereinheit können beispielsweise die hohen Frequenzen der Kommunikationssignale des Mobilfunknetzes bereits ausgeblendet werden. Hierdurch können insbesondere auch Störsignale eliminiert werden.

Die gestellte Aufgabe wird weiterhin erfindungsgemäß gelöst durch ein Antennenverteilsystem mit wenigstens einer Master-Unit und mit einer Anzahl von mit der Master-Unit verbundener Remote-Units, denen ein Schnittstellenmodul der vorbeschriebenen Art zugeordnet ist oder die mit einem solchen ausgestattet sind, wobei die Master-Unit zur selektiven Ansteuerung der Digitaleinheiten der Remote-Units und zum Empfang und zur Weiterleitung der essentiellen Kommunikationssignale ausgebildet ist.

Weitere vorteilhafte Ausgestaltungen hierzu finden sich in den auf ein Antennenverteilsystem gerichteten Unteransprüchen. Die für das Schnittstellenmodul erwähnten Vorteile lassen sich hierbei sinngemäß auf das Antennenverteilsystem übertragen.Zur Erfüllung der genannten Aufgaben ist der Master-Unit bevorzugt eine Anzahl von Schnittstellenmodulen der vorbeschriebenen Art zugeordnet, die mit einer Anzahl von zugewiesenen Remote-Units bzw. mit deren Schnittstellmodulen kommunizieren.

Bevorzugt ist an eine der Schnittstellenmodule ein zentraler Steuerrechner angeschlossen. Dieser kann extern angeordnet sein, oder einen Teil der Master-Unit bilden. Der Steuerrrechner ist zur Koordination der Verteilung der essentiellen Kommunikationssignale innerhalb des Verteilnetzwerks, zur Auswertung der charakteristischen Signalparameter und zu einer den Signalparametern entsprechenden Ansteuerung der Digitaleinheiten ausgebildet. Damit wird eine in gewissen Grenzen automatisierte Ansteuerung der Remote-Units möglich. Beispielsweise können die Digitaleinheiten zu einer entsprechenden Behandlung der durcheilenden essentiellen Kommunikationssignale angesteuert werden, was die Art des verwendeten Übertragungsverfahrens betrifft. Beispielsweise kann hierdurch eine essentielle Kommunikation im Simplex-, Duplex- oder im Semi-Duplex-Verfahren etabliert werden, abhängig von dem empfangenen essentiellen Kommunikationssignal.

Ebenso können auch bereits in der Master-Unit Mittel vorgesehen sein, abhängig von den von den Remote-Units erhaltenen Signalstärken und/oder Laufzeit der essentiellen Kommunikationssignale das diese aussendende mobile Endgerät zu lokalisieren. Dies kann aber ebenso dem zentralen Steuerrechner zugewiesen sein.

Um eine Kommunikation zwischen verschiedenen essentiellen Kommunikationsbändern herzustellen, ist der zentrale Steuerrechner weiter bevorzugt ausgebildet, die Digitaleinheiten zu einer Frequenzumsetzung zwischen den Frequenzbändern und/oder eine Laufzeitverzögerung essentieller Kommunikationssignale anzusteuern.

Ausführungsbeispiele der Erfindung werden anhand einer Zeichnung näher erläutert. Dabei zeigen:
- Fig. 1: schematisch eine Remote-Unit mit einem Schnittstellenmodul zur Übertragung essentieller Kommunikationssignale, und
- Fig. 2: schematisch ein Antennverteilsystem mit einer Anzahl von Remote-Units.

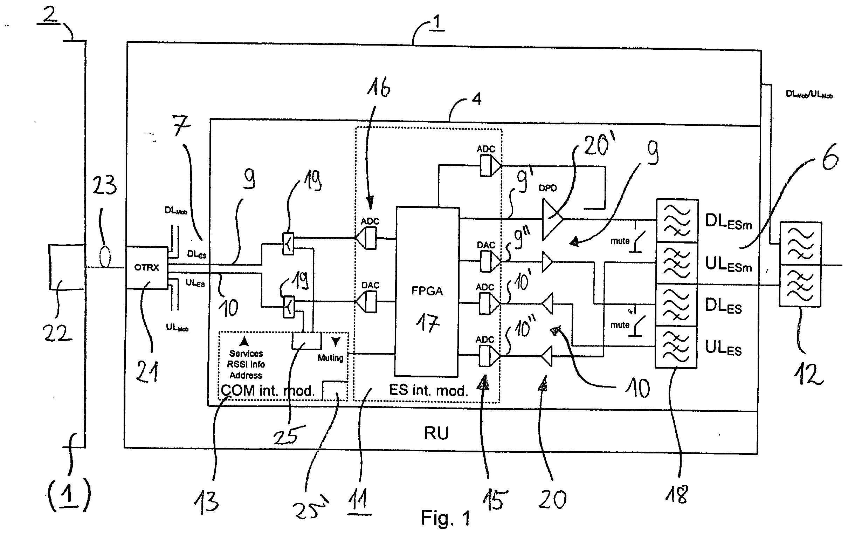

In Fig. 1 ist schematisch eine Remote-Unit 1 dargestellt, wie sie Teil eines Antennenverteilsystems eines Mobilfunknetzes ist. Die Remote-Unit 1 ist dabei eingesetzt, innerhalb von Gebäuden, Tunnels, Fahrzeugen, Bahnhöfen, Stadien usw. eine Funkkommunikation mobiler Endgeräte mit einer außerhalb der gegebenen Örtlichkeit angeordneten Basisstation zu ermöglichen. Dabei ist eine Master-Unit 2 vorgesehen, die in der Nähe der gegebenen Räumlichkeit oder Örtlichkeit angeordnet und mit der Basisstation verbunden ist. Über entsprechende Verbindungsleitungen (optisch, elektrisch) oder über Funk steht die Master-Unit 2 mit einer Anzahl der dargestellten Remote-Units 1 in Verbindung. Die Remote-Units 1 senden und empfangen Kommunikationssignale und etablieren die eigentliche Funkverbindung zu den mobilen Endgeräten.

Die Remote-Unit 1 umfasst neben hier nicht dargestellten weiteren Einheiten zur Sicherstellung einer Kommunikation zwischen der Master-Unit 2 und den mobilen Endgeräten innerhalb des Mobilfunknetzes ein Schnittstellenmodul 4, welches die Einbindung einer Kommunikation auf essentiellen Kommunikationskanälen in die bestehende Funknetzarchitektur ermöglicht.

Das Schnittstellenmodul 4 weist hierzu eine erste Schnittstelle 6 zu einem analogen Datenaustausch mit mobilen Endgeräten sowie eine zweite Schnittstelle 7 zu einem analogen und/oder digitalen Datenaustausch zwischen der Remote-Unit 1, der Master-Unit 2 sowie weiterer Remote-Units auf. Mit anderen Worten kann die Remote-Unit 1 über die zweite Schnittstelle 7 entweder mit der Master-Unit 1 oder mit weiteren Remote-Units 1 in Verbindung stehen. Im letzteren Fall sind die Remote-Units 1 beispielsweise über entsprechende Teiler in Serie oder sternförmig zueinander verbunden. In Fig. 1 ist eine solche Konstellation durch das Bezugszeichen 1 in Klammern angedeutet. Zwischen den beiden Schnittstellen 6 und 7 umfasst das Schnittstellenmodul 4 weiter einen Signalpfad 9 in Downlink-Richtung sowie einen Signalpfad 10 in Uplink-Richtung. Über den Signalpfad 10 werden von der ersten analogen Schnittstelle 6 empfangene Signale zu der zweiten Schnittstelle 7 und von dort weiter zur Master-Unit 2 oder einer oder mehrerer weiterer Remote-Units geleitet. Entlang des Signalpfads 9 werden an der zweiten Schnittstelle 7 von der Master-Unit 2 oder einer oder mehrerer Remote-Units empfangene Signale in Richtung zur ersten analogen Schnittstelle 6 geleitet und von dort per Funk auf mobile Endgeräte übertragen. Zum Empfang und zum Aussenden von Funksignalen ist die erste analoge Schnittstelle 6 mit einer entsprechenden Antenneneinheit verbunden, die vorliegend graphisch nicht dargestellt ist.

In den Downlink-Signalpfad 9 und in den Uplink-Signalpfad 10 ist eine Digitaleinheit 11 eingebunden, die vorrangig die Aufgabe hat, eingehende Kommunikationssignale zu digitalisieren, daraus essentielle Kommunikationssignale zu extrahieren bzw. übrige Kommunikationssignale auszublenden, die essentiellen Kommunikationssignale weiterzuleiten und vor Übermittlung an die analogen Schnittstellen 6 diese wieder analog umzusetzen. Die Weiterleitung der essentiellen Kommunikationssignale an der Schnittstelle 7 zu einer oder mehrere Remote-Units 1 oder zur Master-Unit 2 kann nach Umsetzung analog oder digital erfolgen.

Dem Schnittstellenmodul 4 vorgeschaltet ist ein sogenannter analoger Crossband-Koppler 12, der Kommunikationskanäle des Mobilfunknetzes von essentiellen Kommunikationskanälen trennt. Der Crossband-Koppler 12 kann Teil der Remote-Unit 1 oder des Schnittstellenmoduls 4 sein. Da die mobilen von den essentiellen Kanälen weit getrennt sind, sind die Anforderungen an die Ausgestaltung dieses analogen Filters gering.

Das Schnittstellenmodul 4 weist weiter eine der Digitaleinheit 11 zugeordnete Kommunikationseinheit 13 auf. Die Kommunikationseinheit 13 ist dafür ausgebildet, von der Digitaleinheit 11 aufbereitete Daten gegebenenfalls weiter zu verarbeiten und über die zweite Schnittstelle 7 der Master-Unit 2 oder weiteren Remote-Units zuzuführen. Ebenfalls ist die Kommunikationseinheit 13 dafür ausgebildet, Steuerdaten von der Master-Unit 2 über die zweite Schnittstelle 7 zu empfangen und zu einer Ansteuerung an die Digitaleinheit 11 weiterzuleiten.

Die Digitaleinheit 11 ist maßgeblich durch einen digitalen Schaltkreis 17, der vorliegend als ein programmierbarer integrierter Schaltkreis (FPGA = Field Programmable Gate Array) realisiert ist, gegeben. In diesem digitalen Schaltkreis 17 sind die durchzuführenden Funktionen zur Aufbereitung der digitalen Daten der essentiellen Kommunikationssignale implementiert und steuerbar abrufbar. Sowohl im Uplink-Signalpfad 10 als auch im Downlink-Signalpfad 9 befinden sich Digitalwandlereinheiten 15, die eingehende Kommunikationssignale im Basisband transformieren. Zwischen der zweiten Schnittstelle 7 und der Digitaleinheit 11 sind gemäß der dargestellten Ausführungsform weitere Digitalwandlereinheiten 16 angeordnet. Diese Digitalwandlereinheiten 16 sind nur erforderlich, wenn analoge Signale innerhalb des Verteilsystems transportiert werden sollen. Die Digitaleinheit 11 ist dazu ertüchtigt, aus den digitalisierten Kommunikationssignalen die essentiellen Kommunikationssignale zu identifizieren, gegebenenfalls weiter zu behandeln und in Uplink- bzw. in Downlink-Richtung entsprechend weiterzuleiten. Die übrigen Kommunikationssignale werden ausgeblendet und von dem Schnittstellenmodul 4 nicht mehr weiter berücksichtigt. Zur Identifizierung der essentiellen Kommunikationssignale wird deren Frequenz sowie deren Übertragungsverfahren herangezogen. Insbesondere sind für essentielle Kommunikation freigegebene Bänder in einem Frequenzraum von unterhalb 700 MHz angeordnet. Weiter kann die Art der Modulation der erhaltenen Kommunikationssignale zur Identifizierung verwendet werden. Beispielsweise sind viele essentielle Kommunikationssignale in einfacher Art und Weise amplitudenmoduliert. Gegebenenfalls ist eine Frequenzmodulation gegeben. Auch die Art der Taktung, ein Simplex-, Duplex- oder Semi-Duplex-Betrieb wird von der Digitaleinheit 11 berücksichtigt und zur Identifizierung der essentiellen Kommunikationssignal herangezogen.

Die in der Digitaleinheit 11 digital identifizierten essentiellen Kommunikationssignale können auch direkt von der Kommunikationseinheit 13 übernommen und weitergeleitet werden. Dazu können diese zur Erhöhung der Übertragungsrate auch moduliert werden, insbesondere kann eine Phasen- oder QAM-Modulation vorgenommen sein.

Der ersten analogen Schnittstelle 6 ist weiter eine Vorfiltereinheit 18 zugeordnet. Diese Vorfiltereinheit 18 hat die Aufgabe, eine Grobfilterung der Frequenzbänder essentieller Kommunikationssignale in Uplink- und Downlink-Richtung zu bewirken. Je nach Übertragungsverfahren kann die Vorfilterung als Filter im Frequenz-(FDD) oder als Schalter im Zeitbereich (TDD) realisiert werden. Da die Bänder essentieller Kommunikationskanäle zueinander noch genügend beabstandet sind, genügt im Frequenzbereich ein moderater analoger Frequenzfilter. Nach der Vorfilterung wird im Schnittstellenmodul 4 unabhängig vom Duplex-Verfahren mit zwei separaten Übertragungsrichtungen gearbeitet. Dazu ist jeweils ein getrennter Signalpfad 9 in Uplink- und ein getrennter Signalpfad 10 in Downlink-Richtung ausgebildet. Die Anzahl der Uplink- 9',9" und Downlink-Pfade 10',10" richtet sich dabei nach der Anzahl der essentiellen Frequenzbänder und/oder deren Duplex-Verfahren, die unterstützt werden sollen. Im Ausführungsbeispiel sind exemplarisch zwei FDD Bänder dargestellt.

Die Identifizierung der essentiellen Kommunikationssignale innerhalb der vorgefilterten Frequenzbänder gestaltet sich analog, wie bereits ausgeführt, extrem aufwändig. Die der essentiellen Kommunikation zugewiesenen Kanäle weisen teilweise nur eine Bandbreite im kHz-Bereich auf. Diese eigentliche Identifikation übernimmt daher die Digitaleinheit 11, die die digitalisierten Kommunikationssignale betrachtet.

Zwischen der ersten Schnittstelle 7 und der Digitaleinheit 11 ist jeweils im Uplink-Signalpfad 10 und im Downlink-Signalpfad 9 eine Ein- bzw. Aus-/Ein-Koppeleinheit 19 implementiert. Über diese Ein-/Auskoppeleinheiten 19 erhält die Kommunikationseinheit 13 zum einen Steuerdaten von der Master-Unit 2 und schaltet zum anderen Signalparameter von der Digitaleinheit 11 in Uplink-Richtung dem durchgeleiteten Signal auf. Über die Aus-/Einkoppeleinheit 19 können ferner die digitalen Basisbanddaten ein- bzw. ausgekoppelt werden. Dies geschieht bevorzug über ein höherwertiges digitales Modulationsverfahren, wie beispielsweise QAM.

Zur Verstärkung der empfangenen und auszusendenden Signale befindet sich zwischen der Digitaleinheit 11 und der ersten analogen Schnittstelle 6 eine Anzahl von Verstärkereinheiten 20. Aufgrund der geringen Bandbreite der essentiellen Kommunikationssignale und da diese bereits in Form digitaler Basisbanddaten vorliegen, kann zur Verstärkung des auszusendenden Signals eine digitale Vorverzerrung mittels eines DPD-Verstärkers 20' verwendet werden. Hierdurch können unerwünschte Nebenaussendungen deutlich reduziert werden, was den extrem hohen Dynamikanfoderungen in benachbarten Bändern Rechnung trägt.

Der zweiten Schnittstelle 7 ist ein Elektrooptowandler 21 zugeordnet, mit dem alle Signale in Uplink-Richtung zusammengefasst und auf einen gemeinsamen Lichtwellenleiter 23 aufgeschaltet werden. Über den Lichtwellenleiter 23 steht die Remote-Unit 1 mit der Master-Unit 2 und gegebenenfalls mit weiteren Remote-Units in Verbindung. Zur Auftrennung der empfangenen Signale wandelt dort ein entsprechender Elektrooptowandler 22 eingehende optische Signale wieder in entsprechende elektrische Signale um. Umgekehrt werden an dem Elektrooptowandler 22 der Master-Unit 2 in Downlink-Richtung elektrische Signale in optische Signale umgewandelt und über den Lichtwellenleiter 23 dem Elektrooptowandler 21 der Remote-Unit 1 oder weiterer Remote-Units übermittelt. Dort werden eingehende optische Signale in entsprechende elektrische Signale umgewandelt und dem Downlink-Signalpfad 9 aufgeschaltet. Über die Ein-/Auskoppeleinheit 19 erhält die Kommunikationseinheit 13 hieraus Steuerdaten und gegebenenfalls die digitalen Basisbanddaten für die Digitaleinheit 11. Dazu ist eine Schnittstelle 25 eines digitalen Netzwerks, insbesondere Ethernet, implementiert. Über diese Schnittstelle 25 findet umgekehrt auch der Datenaustausch zwischen den Digitaleinheit 11 verschiedener Remote-Units und der Master-Unit 2 statt.

Die Digitaleinheit 11 und die Kommunikationseinheit 13 sind ausgebildet, um insbesondere Signalstärke- und Laufzeitinformation, die Art des essentiellen Kommunikationssignals sowie eine Adresse der entsprechenden Remote-Units 1, 1',... dem gemeinsamen Übertragungssignal aufzuschalten und an die Master-Unit 2 zu übermitteln. Umgekehrt ist die Kommunikationseinheit 13 ausgebildet, digitale Basisbanddaten sowie Steuerdaten der Master-Unit 2 zu empfangen und die Digitaleinheit 11 entsprechend anzusteuern. Dabei ist beispielsweise vorgesehen, die Digitaleinheit 11 zu einer Zeitverzögerung in Downlink-Richtung anzusteuern, um negative Interferenzeffekte beim Aussenden der essentiellen Kommunikationssignale über mehrere Remote-Units vorteilhaft zu verändern. Auch kann über die Kommunikationseinheit 13 die Digitaleinheit 11 angesteuert werden, um die Remote-Unit 1 in einen direkten Kommunikationsmodus zu schalten. Dabei werden von der ersten analogen Schnittstelle 6 erhaltene essentielle Kommunikationssignale verstärkt, gegebenenfalls frequenzversetzt oder in eine andere Kommunikationstechnologie umgesetzt, zur Wiederaussendung an dieselbe analoge Schnittstelle 2 zurückgesendet. Dadurch wird die entsprechend angesteuerte Remote-Unit 1 zu einer Relaisstation, die vor Ort die Funkkommunikation auf essentiellen Kommunikationskanälen verbessert und es insbesondere erlaubt, zwischen verschiedenen Einheiten, die unterschiedliche essentielle Übertragungsverfahren benutzen, eine Kommunikation aufzubauen. In Uplink-Richtung sind weiter zwei Unterbrechungsschalter den Verstärkern 20 nachgeschaltet. Diese werden von der Kommunikationseinheit angesteuert und verhindern im Leerlauffall ein Aussenden von Rauschen.

Die Kommunikationseinheit 13 kommuniziert nicht notwendigerweise über die zweite Schnittstelle 7. Insbesondere kann die Kommunikation mit der Kommunikationseinheit 13 auch über eine direkte digitale Schnittstelle 25' in eine digitales Netz wie Ethernet erfolgen. An diese Schnittstelle kann unmittelbar ein Steuerrechner angeschlossen werden. Mit anderen Worten kann vor Ort durch Anschluss an die Schnittstelle 25' eine lokale Leitzentrale gebildet werden, um rasch eine Steuerungsmöglichkeit in einem Katastrophenfall etc. über die verschiedenen essentiellen Kommunikationskanäle zu erhalten, wobei die Architektur des bestehenden Netzwerks der Mobilfunkkommunikation genutzt wird.

Darüber hinaus kann bevorzugt die Kommunikation mit der Master-Unit 2 auch über Funk erfolgen. Wegen der geringen Informationsdichte der zu übertragenden Daten kann die zweite Schnittstelle 7 auch als eine Funkschnittstelle in ein WLAN-Netz ausgebildet sein.

Am Crossband-Koppler 12 werden die Kommunikationssignale des Mobilfunks von den essentiellen Signalen getrennt. Die Kommunikationssignale des Mobilfunks durchlaufen die dafür eigentlich vorgesehene Remote-Unit 1 unbeinflusst vom Schnittstellenmodul 4. An der zweiten Schnittstelle 7 können nun, wie in Fig.1 angedeutet, sämtliche Übertragungssignale, also die des Mobilnetzes und die der essentiellen Übertragungskanäle, Digital- und Analogsignale zusammengeführt sein, und über die gemeinsame Übertragungsleitung, hier der Lichtwellenleiter 23, an die Master-Unit 1 oder an weitere Remote-Units weitergeleitet werden. Umgekehrt, also in Downlink-Richtung werden dort dann die entsprechenden, ankommenden Signale getrennt. Ebenso kann aber das Schnittstellenmodul 4 mit einer separaten zweiten Schnittstelle 7 ausgestattet sein, über die nur die digitalen und/oder analogen Signale der essentiellen Kommunikationskanäle bzw. der Kommunikationseinheit 13 laufen.

Das Schnittstellenmodul 4 kann ein integrierbarer Bestandteil der Remote-Unit 1 oder einer Master-Unit 2 sein. Es kann aber auch als ein separates Zusatzmodul ausgeführt sein, welches über die entsprechenden Leitungen mit der Remote-Unit 1 oder der Master-Unit 2 verbunden ist. Vorliegend ist es mit der zweiten Schnittstelle 7 und dem Crossband-Koppler 12 verbunden.

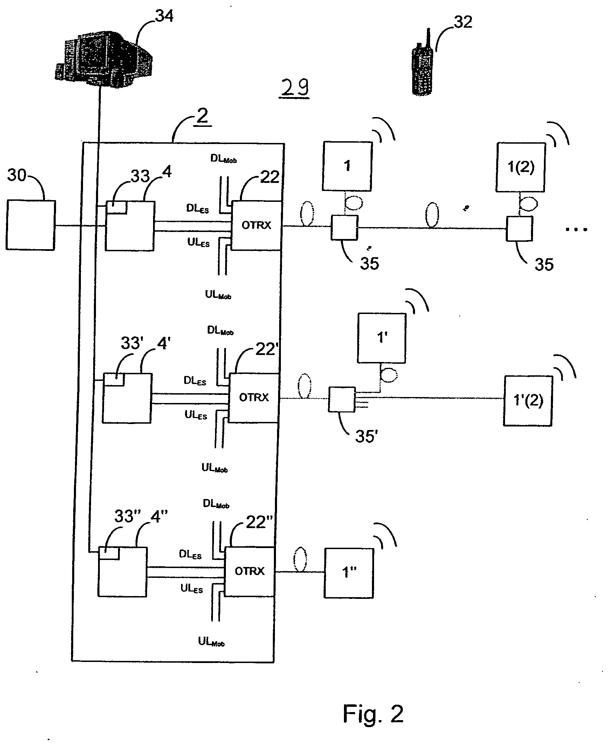

In Fig. 2 ist schematisch ein Antennenverteilsystem 29 dargestellt, wie es zum Aufbau einer Kommunikation innerhalb geschlossener Räume, Tunnels, Fahrzeugen, Stadien oder allgemein in einem Funkschatten verwendet wird. Dazu umfasst das Antennenverteilsystem 29 eine Basisstation 30, die drahtgebunden oder per Funk mit einer Master-Unit 2 verbunden ist. Die Master-Unit 2 ist außerhalb der gegebenen Örtlichkeit angeordnet und tauscht Daten mit innerhalb der Örtlichkeit angeordneten Remote-Units 1,1',1" aus. Der Austausch findet hierbei über einen jeweils gemeinsamen Lichtwellenleiter statt. Innerhalb der gegebenen Örtlichkeit findet die Kommunikation zwischen einem mobilen Endgerät 32 und den jeweiligen Remote-Units 1',1",1'" funkgebunden statt.

Die Master-Unit 2 verfügt zum Anschluss von Remote-Units 1,1',1" mehrere Elektrooptokoppler 22, wie sie zu Fig. 1 bereits beschrieben sind. In Fig. 2 sind von oben nach unten an diese Elektrooptokoppler 22 zwei Remote-Units 1, 1(2) in Serie, zwei Remote-Units 1', 1'(2) sternförmig, und eine Remote-Unit 1" alleine angeschlossen. Alle Remote-Units 1,1',1" sind mit der Master-Unit 2 über Lichtwellenleiter verbunden.Zur Auftrennung der Signale von und zu den einzelnen Remote-Units 1',1",1" sind jeweils optische Teiler 35 vorgesehen.

Das gezeigte Antennenverteilsystem 29 ermöglicht es, in von außen per Funk schwer zu erreichenden Örtlichkeiten eine Funkkommunikation ausreichender Qualität aufzubauen. Die in Fig. 2 gezeigten Remote-Units 1,1',1" sind allesamt mit einem Schnittstellenmodul 4 entsprechend Fig. 1 ausgestattet. Dabei findet die Uplink-Kommunikation jeweils über die zweite Schnittstelle 7 statt, an der alle Übertragungssignale zusammengeführt bzw. getrennt werden, und gemeinsam über einen Lichtwellenleiter übertragen werden. In den Elektrooptokopplern 22 der Master-Unit 2 werden eingehende Kommunikationssignale entsprechend aufgetrennt. Insbesondere werden die Kommunikationssignale des Mobilfunknetzes abgetrennt und der üblichen Weiterverarbeitung, Übertragung, Verstärkung etc. unterzogen. Die Übertragungssignale der jeweiligen Schnittstellenmodule 4 aus den Remote-Units 1,1',1" werden abgetrennt. Zur Weiterverarbeitung und Weiterleitung dieser essentiellen Übertragungssignale sind in der Master-Unit 2 jeweils entsprechende, den Elektrooptpkopplern 22, 22',22" zugeordnete, entsprechend Fig. 1 aufgebaute Schnittstellenmodule 4,4',4" vorgesehen. Über jeweilige den Kommunikationseinheiten 25 zugeordnete lokale LAN-Schnittstellen 33, 33',33" findet dann die Kommunikation mit einem zentralen Steuerrechner 34 statt. Dabei werden insbesondere digitale Basisbanddaten einschließlich einer IP-Adresse der jeweiligen Remote-Units 1,1',1" ausgetauscht. Der Steuerrechner 34 kann insbesondere einen Festnetzanschluss aufweisen.

Ein derart ausgestaltetes Antennenverteilsystem 29 ermöglicht es, die Vorzüge einer modernen Netzwerkarchitektur für die Übermittlung essentieller Kommunikationssignale zu nutzen.

### Bezugszeichenliste

- 1: Remote-Unit
- 2: Master-Unit
- 4: Schnittstellenmodul
- 6: erste analoge Schnittstelle
- 7: zweite analoge Schnittstelle
- 9: Signalpfad
- 10: Signalpfad
- 11: Digitaleinheit
- 12: Crossband-Koppler
- 13: Kommunikationseinheit
- 15: Digitalwandlereinheiten
- 16: Digitalwandlereinheiten
- 17: Digitaler Schaltkreis (FPGA)
- 18: Vorfiltereinheit
- 19: Ein/Auskoppeleinheit
- 20: Verstärkereinheit
- 20': DPD-Verstärker
- 21: Elektrooptokoppler
- 22: Elektrooptokoppler
- 23: Lichtwellenleiter
- 25: Schnittstelle
- 25': Schnittstelle
- 29: Antennenverteilsystem
- 30: Basisstation
- 32: Mobiles Endgerät
- 33: Lokaler LAN-Anschluß
- 34: Zentraler Steuerrechner mit/ohne Festnetzanschluß
- 35: Optischer Teiler

## Patentansprüche

1. Schnittstellenmodul (4) für eine zur Durchleitung und/oder Verstärkung von Kommunikationssignalen innerhalb eines Antennenverteilsystems (29) ausgelegte Einheit (1,2), umfassend:
- eine erste analoge Schnittstelle (6) zur Weiterleitung und zum Empfang von Kommunikationssignalen mobiler Endgeräte,
- eine zweite Schnittstelle (7) zur Weiterleitung und zum Empfang von Kommunikationssignalen des Antennenverteilsystems (29),
- wenigstens einen Signalpfad (9,10) zur Weiterleitung der empfangenen Kommunikationssignale zwischen der ersten analogen Schnittstelle (6) und der zweiten Schnittstelle (7),
- eine steuerbare Digitaleinheit (11), welche den Signalpfad (9,10) aufnimmt und welche ausgebildet ist zur Digitalisierung auf dem wenigstens einen Signalpfad eingehender Kommunikationssignale und zur Analogumwandlung ausgehender Kommunikationssignale, und
- eine separate mit dem Signalpfad (9,10) verbundene Kommunikationseinheit (13),
wobei die steuerbare Digitaleinheit (11) ausgebildet ist,
- in den digitalisierten Kommunikationssignalen solche Kommunikationssignale zu identifizieren, welche sich in der Frequenz, in der Art der Modulation und/oder in dem Übertragungsverfahren unterscheiden, um essentielle Kommunikationssignale, zur Kommunikation auf für den Notfall freigeschalteten Frequenzen, von übrigen Kommunikationssignalen zu unterscheiden,
- die übrigen, nicht identifizierten Kommunikationssignale auszublenden und
- die identifizierten Kommunikationssignale weiterzuleiten,
und wobei die Kommunikationseinheit (13) ausgebildet ist, Informations- und Steuerdaten zwischen einer Master-Unit (2) und der Digitaleinheit (11) auszutauschen.

2. Schnittstellenmodul (4) nach Anspruch 1,
wobei die Digitaleinheit (11) ausgebildet ist, charakteristische Signalparameter der identifizierten essentiellen Kommunikationssignale zu erfassen und ebenfalls weiterzuleiten.

3. Schnittstellenmodul (4) nach Anspruch 2,
wobei die Digitaleinheit (11) ausgebildet ist, als charakteristische Signalparameter die Signalstärke, die Häufigkeit, das Frequenzband und/oder die Kommunikationsart der identifizierten essentiellen Kommunikationssignale zu erfassen und weiterzuleiten.

4. Schnittstellenmodul (4) nach einem der vorhergehenden Ansprüche,
wobei die Digitaleinheit (11) zu einer Digitalisierung der Kommunikationssignale im Basisband ausgebildet ist.

5. Schnittstellenmodul (4) nach einem der vorhergehenden Ansprüche,
wobei die Digitaleinheit (11) zu einer steuerbaren Verzögerung und/oder Unterbrechung der Weiterleitung der essentiellen Kommunikationssignale in Richtung zur ersten analogen Schnittstelle (6) ausgebildet ist.

6. Schnittstellenmodul (4) nach einem der vorhergehenden Ansprüche,
wobei die Digitaleinheit (11) zu einer steuerbaren Unterbrechung der Weiterleitung der essentiellen Kommunikationssignale in Richtung zur zweiten analogen Schnittstelle (7) ausgebildet ist.

7. Schnittstellenmodul (4) nach einem der vorhergehenden Ansprüche,
wobei die Digitaleinheit (11) zu einer Rückführung von eingehenden essentiellen Kommunikationssignalen zur ersten analogen Schnittstelle (6) ausgebildet ist.

8. Schnittstellenmodul (4) nach einem der vorhergehenden Ansprüche,
wobei die Digitaleinheit (11) zu einer steuerbaren Frequenzumsetzung zwischen den Frequenzbändern essentieller Kommunikationssignale ausgebildet ist.

9. Schnittstellenmodul (4) nach einem der vorhergehenden Ansprüche,
wobei die Kommunikationseinheit (13) zum Austausch der Informations- und Steuerdaten eine Schnittstelle für ein digitales Datennetz umfasst.

10. Schnittstellenmodul (4) nach einem der vorhergehenden Ansprüche,
wobei die Kommunikationseinheit (13) zur Aufkopplung der Informations- und Steuerdaten auf das Kommunikationssignal mit dem Signalpfad (9,10) verbunden ist.

11. Schnittstellenmodul (4) nach einem der vorhergehenden Ansprüche,
wobei wenigstens eine analoge Filtereinheit (18) angeordnet ist, zur Abtrennung der Frequenzbänder eingehender und ausgehender analoger essentieller Kommunikationssignale.

12. Antennenverteilsystem (29) mit wenigstens einer Master-Unit (2) und mit
einer Anzahl von mit der Master-Unit (2) verbundener Remote-Units (1), denen ein Schnittstellenmodul (4) nach einem der vorhergehenden Ansprüche 1 bis 11 zugeordnet ist, wobei die Master-Unit (2) zur selektiven Ansteuerung der Digitaleinheiten (11) der Remote-Units (1) und zum Empfang und zur Weiterleitung der essentiellen Kommunikationssignale ausgebildet ist.

13. Antennenverteilsystem (29) nach Anspruch 12,
wobei die Master-Unit (2) mit einer Mehrzahl von Schnittstellenmodulen (4) nach einem der vorhergehenden Ansprüche 1 bis 12 ausgestattet ist.

14. Antennenverteilsystem (29) nach Anspruch 12 oder 13,
wobei an eines der Schnittstellenmodule (4) ein Steuerrechner (34) angeschlossen ist, der zum Empfang und zur Auswertung der charakteristischen Signalparameter der essentiellen Kommunikationssignale und zu einer den Signalparametern entsprechenden Ansteuerung der Digitaleinheiten (11) ausgebildet ist.

15. Antennenverteilsystem (29) nach Anspruch 14,
wobei der Steuerrechner (34) ausgebildet ist, abhängig von der von den Remote-Units (1) erhaltenen Signalstärken und/oder Laufzeit der essentiellen Kommunikationssignale das diese aussendende mobile Endgerät (32) zu lokalisieren.

16. Antennenverteilsystem (29) nach Anspruch 14 oder 15,
wobei der Steuerrechner (34) ausgebildet ist, die Digitaleinheiten (11) zu einer Frequenzumsetzung zwischen den Frequenzbändern und/oder eine Laufzeitverzögerung essentieller Kommunikationssignale anzusteuern.

## Claims

1. Interface module (4) for a unit (1, 2) which is designed to transmit and/or amplify communication signals inside an antenna distribution system (29), comprising:
- a first analogue interface (6) for forwarding and receiving communication signals from mobile terminals,
- a second interface (7) for forwarding and receiving communication signals from the antenna distribution system (29),
- at least one signal path (9, 10) for forwarding the received communication signals between the first analogue interface (6) and the second interface (7),
- a controllable digital unit (11) which incorporates the signal path (9, 10) and which is designed for digitizing incoming communication signals on the at least one signal path and for subjecting outgoing communication signals to analogue conversion, and
- a separate communication unit (13) connected to the signal path (9, 10),
the controllable digital unit (11) being designed
- to identify those communication signals which differ in frequency, in the type of modulation and/or in the transmission method in the digitized communication signals in order to distinguish essential communication signals, for communication on frequencies enabled in an emergency, from remaining communication signals,
- to mask the remaining signals which have not been identified and
- to forward the communication signals identified, and the communication unit (13) being designed to interchange information and control data between a master unit (2) and the digital unit (11).

2. Interface module (4) according to Claim 1,
the digital unit (11) being designed to detect characteristic signal parameters of the essential communication signals identified and to likewise forward said signal parameters.

3. Interface module (4) according to Claim 2,
the digital unit (11) being designed to detect and forward, as characteristic signal parameters, the signal strength, the rate, the frequency band and/or the type of communication of the essential communication signals identified.

4. Interface module (4) according to one of the preceding claims,
the digital unit (11) being designed to digitize the communication signals in the baseband.

5. Interface module (4) according to one of the preceding claims,
the digital unit (11) being designed to delay and/or interrupt the forwarding of the essential communication signals in the direction of the first analogue interface (6) in a controllable manner.

6. Interface module (4) according to one of the preceding claims,
the digital unit (11) being designed to interrupt the forwarding of the essential communication signals in the direction of the second analogue interface (7) in a controllable manner.

7. Interface module (4) according to one of the preceding claims,
the digital unit (11) being designed to feed essential incoming communication signals back to the first analogue interface (6).

8. Interface module (4) according to one of the preceding claims,
the digital unit (11) being designed for controllable frequency conversion between the frequency bands of essential communication signals.

9. Interface module (4) according to one of the preceding claims,
the communication unit (13) comprising an interface for a digital data network in order to interchange the information and control data.

10. Interface module (4) according to one of the preceding claims,
the communication unit (13) being connected to the signal path (9, 10) for the purpose of coupling the information and control data to the communication signal.

11. Interface module (4) according to one of the preceding claims,
at least one analogue filter unit (18) being arranged for separating the frequency bands of essential incoming and outgoing analogue communication signals.

12. Antenna distribution system (29) having at least one master unit (2) and a number of remote units (1) which are connected to the master unit (2) and are associated with an interface module (4) according to one of the preceding Claims 1 to 11, the master unit (2) being designed to selectively drive the digital units (11) of the remote units (1) and to receive and forward the essential communication signals.

13. Antenna distribution system (29) according to Claim 12,
the master unit (2) being equipped with a plurality of interface modules (4) according to one of the preceding Claims 1 to 12.

14. Antenna distribution system (29) according to Claim 12 or 13,
a control computer (34) which is designed to receive and evaluate the characteristic signal parameters of the essential communication signals and to drive the digital units (11) in accordance with the signal parameters being connected to one of the interface modules (4).

15. Antenna distribution system (29) according to Claim 14,
the control computer (34) being designed to locate the mobile terminal (32) transmitting the communication signals identified on the basis of the signal strengths and/or propagation time of the essential communication signals received from the remote units (1).

16. Antenna distribution system (29) according to Claim 14 or 15,
the control computer (34) being designed to drive the digital units (11) for the purpose of frequency conversion between the frequency bands and/or a propagation time delay of essential communication signals.

## Revendications

1. Module d'interface (4) pour une unité (1, 2) destinée à la transmission et/ou à l'amplification de signaux de communication dans un système de répartition d'antennes (29), comprenant :
- une première interface analogique (6) destinée à transmettre et recevoir des signaux de communication de terminaux mobiles,
- une deuxième interface (7) destinée à transmettre et recevoir des signaux de communication du système de répartition d'antennes (29),
- au moins un trajet de signal (9, 10) destinée à transmettre les signaux de communication reçus entre la première interface analogique (6) et la deuxième interface (7),
- une unité numérique commandable (11) qui reçoit le trajet de signal (9, 10) et qui est conçue pour numériser des signaux de communication entrants sur ledit au moins un trajet de signal et pour effectuer une conversion analogique de signaux de communication sortants, et
- une unité de communication (13) séparée reliée au trajet de signal (9, 10),
dans lequel l'unité numérique commandable (11) est conçue
- pour identifier, parmi les signaux de communication numérisés, les signaux de communication qui se distinguent par la fréquence, le type de modulation et/ou le procédé de transmission afin de distinguer les signaux de communication essentiels, pour la communication sur des fréquences permettant une utilisation d'urgence, des autres signaux de communication,
- masquer les autres signaux de communication non identifiés, et
- transmettre les signaux de communication identifiés, et dans lequel l'unité de communication (13) est conçue pour échanger des informations et des données de commande entre une unité maîtresse (2) et l'unité numérique (11).

2. Module d'interface (4) selon la revendication 1,
dans lequel l'unité numérique (11) est conçue pour détecter des paramètres de signal caractéristiques des signaux de communication essentiels identifiés ainsi que pour les transmettre.

3. Module d'interface (4) selon la revendication 2,
dans lequel l'unité numérique (11) est conçue pour détecter et transmettre en tant que paramètres de signal caractéristiques l'intensité de signal, la fréquence, la bande de fréquences et/ou le type de communication des signaux de communication essentiels identifiés.

4. Module d'interface (4) selon l'une des revendications précédentes,
dans lequel l'unité numérique (11) est conçue pour numériser les signaux de communication en bande de base.

5. Module d'interface (4) selon l'une des revendications précédentes,
dans lequel l'unité numérique (11) est conçue pour retarder et/ou interrompre de manière commandable la transmission des signaux de communication essentiels dans la direction de la première interface analogique (6) .

6. Module d'interface (4) selon l'une des revendications précédentes,
dans lequel l'unité numérique (11) est conçue pour interrompre de manière commandable la transmission des signaux de communication essentiels dans la direction de la deuxième interface analogique (7).

7. Module d'interface (4) selon l'une des revendications précédentes,
dans lequel l'unité numérique (11) est conçue pour renvoyer des signaux de communication essentiels entrants vers la première interface analogique (6).

8. Module d'interface (4) selon l'une des revendications précédentes,
dans lequel l'unité numérique (11) est conçue pour effectuer une conversion de fréquence commandable entre les bandes de fréquences des signaux de communication essentiels.

9. Module d'interface (4) selon l'une des revendications précédentes,
dans lequel l'unité de communication (13) comprend une interface destinée à un réseau de données numérique, destinée à échanger les données d'information et de commande.

10. Module d'interface (4) selon l'une des revendications précédentes,
dans lequel l'unité de communication (13) est reliée au trajet de signal (9, 10) pour coupler les données d'information et de commande sur le signal de communication.

11. Module d'interface (4) selon l'une des revendications précédentes,
dans lequel il est prévu au moins une unité de filtrage analogique (18) destinée à séparer les bandes de fréquences des signaux de communication analogiques essentiels entrants et sortants.

12. Système de répartition d'antennes (29) comportant au moins une unité maîtresse (2) et un certain nombre d'unités distantes (1) reliées à l'unité maîtresse (2) et auxquelles est associé un module d'interface (4) selon l'une des revendications 1 à 11 précédentes, dans lequel l'unité maîtresse (2) est conçue pour commander sélectivement les unités numériques (11) des unités distantes (1) et pour recevoir et transmettre les signaux de communication essentiels.

13. Système de répartition d'antennes (29) selon la revendication 12,
dans lequel l'unité maîtresse (2) est équipée d'une pluralité de modules d'interface (4) selon l'une des revendications 1 à 12 précédentes.

14. Système de répartition d'antennes (29) selon la revendication 12 ou 13,
dans lequel un ordinateur de commande (34) est connecté à l'un des modules d'interface (4) et est conçu pour recevoir et évaluer les paramètres de signal caractéristiques des signaux de communication essentiels et pour commander les unités numériques (11) en fonction des paramètres de signal.

15. Système de répartition d'antennes (29) selon la revendication 14,
dans lequel l'ordinateur de commande (34) est conçu, en fonction de l'intensité de signal et/ou du temps de propagation des signaux de communication essentiels obtenus des unités distantes (1), pour localiser le terminal mobile (32) qui transmet ces derniers.

16. Système de répartition d'antennes (29) selon la revendication 14 ou 15,
dans lequel l'ordinateur de commande (34) est conçu pour commander les unités numériques (11) afin d'effectuer une conversion de fréquence entre les bandes de fréquences et/ou pour commander un retard de temps de propagation de signaux de communication essentiels.
